# EUROPÄISCHE PATENTSCHRIFT

(11) **EP 0 514 803 B1**
(45) Veröffentlichungstag und Bekanntmachung des Hinweises auf die Patenterteilung: **17.01.1996**
(21) Anmeldenummer: 92108328.3
(22) Anmeldetag: 18.05.1992
(51) Int. Cl.: B65D 77/20

(54) **Becherartige Verpackung mit Deckelfolie aus Kunststoff**
Cup-shaped package having a plastic lid foil
Emballage en forme de gobelet à feuille de fermeture en plastique

(30) Priorität: 23.05.1991 DE 4116808
(43) Veröffentlichungstag der Anmeldung: 25.11.1992
(73) Patentinhaber: HOECHST AKTIENGESELLSCHAFT, D-65926 Frankfurt am Main (DE)
(72) Erfinder: Beer, Ekkehard, W-6208 Bad Schwalbach (DE); Schad, Alfred, W-6200 Wiesbaden (DE)

(56) Entgegenhaltungen:
- EP-A- 0 007 971
- EP-A- 0 115 033
- EP-A- 0 149 180
- CH-A- 673 827
- DE-A- 2 717 866

## Beschreibung

Die vorliegende Erfindung betrifft eine becherartige Verpackung aus Kunststoff, umfassend einen einstückigen Aufnahmebehälter, dessen kopfseitige Füll- und Entnahmeöffnung mit einer abziehbaren Deckelfolie verschlossen ist, wobei die Deckelfolie eine mehrschichtige Kunststoffolie ist und aus zwei außenliegenden Kunststoffschichten aufgebaut ist, zwischen die eine Haftschicht eingebettet ist.

Becherpackungen aus Kunststoff für Nahrungsmittel wie Molkereiprodukte aller Art, Pudding, Babynahrung und ähnliches werden in großem Umfang hergestellt und erfolgreich verkauft. Der Grund hierfür ist, daß Kunststoffe im allgemeinen eine ausnehmend gute mechanische Beständigkeit besitzen, die den Transport und die Lagerung der betreffenden Verpackungsgüter erleichtert. Außerdem besitzen die meisten Kunststoffe eine hervorragende Sperrwirkung gegenüber Wasser und Wasserdampf, wodurch wirksam ein Austrocknen der Verpackungsinhalte oder deren Verschmutzung von außen unterbunden wird. Ein weiterer Grund ist darin zu sehen, daß Kunststoff durch Formgebung und Einfärbung leicht in eine optisch ansprechende Erscheinungsform gebracht werden kann, wodurch nach dem Willen der Hersteller das ästhetische Empfinden der Verbraucher in besonders angenehmer Weise angesprochen werden soll und der Eindruck von hochwertiger Qualität entsteht.

Üblicherweise lassen sich die Becherpackungen, die mit bedruckten Deckelfolien verschlossen sind, leicht öffnen, indem die Deckelfolie an einer Lasche, die entweder seitlich absteht oder an dem Becherrand angebracht ist, mit zwei Fingern nach hinten abgezogen wird, wodurch die Entnahmeöffnung des Bechers frei wird.

Das Herstellungsverfahren der gefüllten Becherpackungen sieht vor, daß zunächst das Füllgut in den Aufnahmebehälter eingebracht wird, wonach die Platine für die Deckelfolie aufgelegt und mit dem Aufnahmebehälter durch eine in sich geschlossene Siegelnaht verbunden wird. Alle Verfahrensschritte werden üblicherweise auf Verpackungsmaschinen automatisch durchgeführt. Es hat sich deshalb als besonders zweckmäßig herausgestellt, die Deckelfolie aus Metall oder wenigstens metallfolienhaltigem Laminat herzustellen, weil dieses Material durch eine geeignete Oberflächenausgestaltung so geprägt werden kann, daß auf den automatischen Verpackungsmaschinen keine Betriebsstörungen durch aneinanderhalftende Deckelfolienplatinen entstehen. Die Metallfolien haben jedoch Nachteile, weil sie ein sehr energieintensives Verpackungsmaterial sind, eine geringe Durchstoßfestigkeit beim Transport (Einkaufswagen) aufweisen und weil man wegen der nach dem bestimmungsgemäßen Einsatzzweck der Verpackungen notwendigen Entsorgung bestrebt ist, einheitliche Verpackungen, das heißt Verpackungen aus einheitlichem Material zu schaffen.

Das Dokument DE-A-27 17 866 beschreibt einen flüssigkeitsdichten, aufreißbaren Verschluß für einen Behälter, bestehend aus einer auf eine Öffnung des Behälters aufgeschweißten Verschlußfolie. Die Verschlußfolie ist eine Verbundfolie, die aus einer Haftschicht aus einem Kunststoffmaterial besteht, welches mit dem Kunststoffmaterial des Behälters verträglich ist. Über dem Behälter befindet sich eine Zwischenschicht, über welcher wiederum eine Trägerfolie angeordnet ist. Die Haftschicht ist zumindest im Bereich der Schweißnaht perforiert.

Die Aufgabe der vorliegenden Erfindung besteht darin, eine becherartige Verpackung zu schaffen, die eine Deckelfolie aus Kunststoff aufweist, wobei sich die Deckelfolie in Form von vorgefertigten Platinen ohne Probleme auf schnellaufenden automatischen Verpackungsmaschinen verarbeiten lassen soll.

Gelöst wird diese Aufgabe erfindungsgemäß durch eine becherartige Verpackung der eingangs genannten Gattung, in der Weise, daß die mehrschichtige Kunststoffolie eine mehrschichtige Polyesterfolie ist, die außenliegenden Kunststoffschichten Polyesterschichten sind, die Haftschicht eine niedrig schmelzende Polyesterschicht ist und die Deckelfolie auf der Oberseite eine Oberflächenstrukturierung besitzt.

Die Oberflächenstrukturierung ist zweckmäßigerweise ein Prägemuster, das heißt, das Resultat eines Prägeschrittes, bei dem eine Folienoberflache durch das Einsenken von beheizten gravierten Formstempeln oder auch Walzen, sogenannten Prägewerkzeugen, geformt oder strukturiert wird. Die Prägetiefe des Prägemusters, gemessen als Höhenunterschied von der Spitze einer Erhebung zur Talsohle, liegt im Bereich von 0,5 bis 50 µm, vorzugsweise von 3 bis 30 µm, besonders bevorzugt von 5 bis 20 µm.

Die Deckelfolie ist erfindungsgemäß eine mehrschichtige Folie aus Polyester. Eine geeignete Folie ist beispielsweise in der EP-A-0 115 033 beschrieben und setzt sich zusammen aus zwei außenliegenden Polyesterschichten, zwischen die eine niedriger schmelzende Polyesterschicht eingebettet ist. Als Polyestermaterial für die außenliegenden Schichten hat sich in der Praxis Polyethylenterephthalat bislang am besten bewährt, während für die innenliegende Zwischenschicht ein Copolyester eingesetzt wird, der neben Ethylenterephthalateinheiten auch noch Ethylenisophthalateinheiten in einer Menge zwischen 5 und 50 Mol-%, bezogen auf den Gesamtgehalt des Copolyesters, enthält.

Die Deckelfolie für die erfindungsgemäße Becherverpackung trägt auf ihrer Unterseite, das ist definitionsgemäß die Seite, die nicht mit dem Prägewerkzeug in Berührung kommt und die bei der fertigen Becherpackung der Füll- und Entnahmeöffnung des Aufnahmebehälters zugewandt ist, eine zusätzliche Siegelschicht. Als Siegelschichten eignen sich insbesondere Heiß- oder Kaltsiegelschichten auf Basis von Polyolefin, Polyvinylidenchlorid, Copolyestern oder Polyacrylat/methacrylatgemischen, die entweder aus Dispersion, durch Extrusion oder durch Coextrusion angetragen werden können.

Auf der Oberseite, das ist definitionsgemäß die Seite der Deckelfolie, die dem Prägewerkzeug zugewandt ist, kann die Deckelfolie mit einer Metallisierung und/oder einer Bedruckung versehen sein.

Die Gesamtdicke der Deckelfolie liegt bevorzugt im Bereich von 20 bis 1 000 µm, insbesondere von 30 bis 500 µm, besonders bevorzugt von 35 bis 200 µm.

Der Aufnahmebehälter der erfindungsgemäßen Becherpackung, nachfolgend auch als Becherteil bezeichnet, ist vorzugsweise einstückig und vorzugsweise nach dem Tiefziehverfahren aus thermoplastischem Kunststoff geformt. Das Becherteil besitzt einen die kopfseitige Füll- und Entnahmeöffnung umgebenden Randflansch, der sich vorzugsweise in einer Ebene erstreckt und eine in sich geschlossene Linie bildet. Mit dem Randflansch ist die Deckelfolie durch die Siegelnaht verbunden.

Die bei der erfindungsgemäßen Verpackung zum Einsatz kommende Deckelfolie aus Kunststoff bietet zusätzlich gegenüber einer Deckelfolie aus Metall den Vorteil, daß ihre Reißfestigkeit materialbedingt größer ist und daß deshalb beim Entfernen der Deckelfolie ein Einreißen praktisch nicht beobachtet wird, sondern die gesamte Deckelfolie sich mühelos von der Füll- und Entnahmeöffnung entfernen läßt.

Die Erfindung wird nachfolgend durch eine Zeichnung beispielhaft noch näher erläutert, ohne jedoch auf die konkrete Darstellungsform beschränkt zu sein.

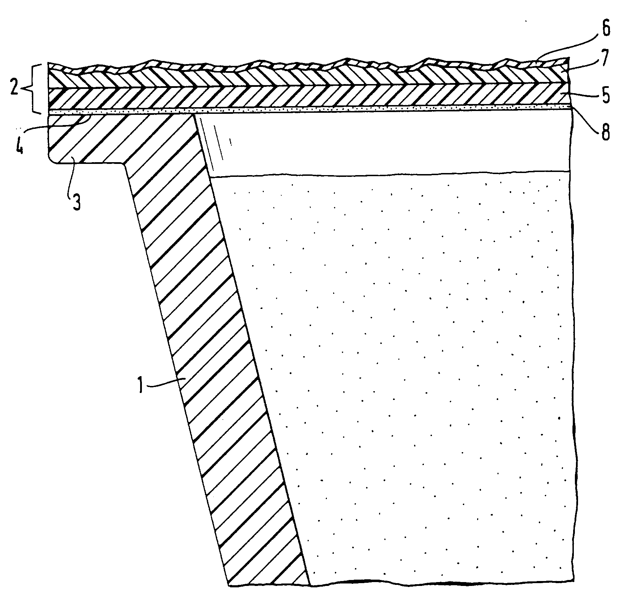

Die einzige Figur zeigt einen senkrechten Schnitt durch einen Teil einer erfindungsgemäßen Verpackung in seitlicher Ansicht.

Mit Bezugszeichen sind das tiefgezogene Becherteil 1 und die Deckelfolie 2 besonders hervorgehoben. Die Deckelfolie 2 ist mit dem Randflansch 3 über die Siegelnaht 4 verbunden. Die Deckelfolie 2 enthält zwei Polyesterschichten 5 und 6, zwischen die eine prägbare Copolyesterschicht 7 eingebettet ist. Zusätzlich weist die Deckelfolie 2 der Darstellung auch noch eine Siegelschicht 8 auf.

## Patentansprüche

1. Becherartige Verpackung aus Kunststoff, umfassend einen einstückigen Aufnahmebehälter (1), dessen kopfseitige Füll- und Entnahmeöffnung mit einer abziehbaren Deckelfolie (2) verschlossen ist, wobei die Deckelfolie eine mehrschichtige Kunststoffolie ist und aus zwei außenliegenden Kunststoffschichten aufgebaut ist, zwischen die eine Haftschicht eingebettet ist, dadurch gekennzeichnet, daß die mehrschichtige Kunststoffolie eine mehrschichtige Polyesterfolie (5,6) ist, die außenliegenden Kunststoffschichten Polyesterschichten sind, die Haftschicht eine niedrig schmelzende Polyesterschicht (7) ist, und die Deckelfolie auf der Oberseite eine Oberflächenstrukturierung besitzt.

2. Verpackung nach Anspruch 1, dadurch gekennzeichnet, daß die Oberflächenstrukturierung ein Prägemuster ist.

3. Verpackung nach Anspruch 1 oder 2, dadurch gekennzeichnet, daß die Prägetiefe des Prägemusters, gemessen als Höhenunterschied von der Spitze einer Erhebung zur Talsohle, im Bereich von 0,5 bis 50 µm liegt, vorzugsweise von 3 bis 30 µm, besonders bevorzugt von 5 bis 20 µm.

4. Verpackung nach einem der Ansprüche 1 bis 3, dadurch gekennzeichnet, daß das Polyestermaterial für die außenliegenden Schichten Polyethylenterephthalat enthält und daß die innenliegende Zwischenschicht einen Copolyester enthält, der neben Ethylenterephthalateinheiten auch noch Ethylenisophthalateinheiter in einer Menge zwischen 5 und 50 Mol-% enthält, bezogen auf den Gesamtgehalt des Copolyesters.

5. Verpackung nach einem der Ansprüche 1 bis 4, dadurch gekennzeichnet, daß die Deckelfolie auf ihrer Unterseite eine zusätzliche Siegelschicht trägt.

6. Verpackung nach einem der Ansprüche 1 bis 5, dadurch gekennzeichnet, daß die Siegelschicht eine Heiß- oder Kaltsiegelschicht auf Basis von Polyolefin, Polyvinylidenchlorid, Copolyestern oder Polyacrylat/methacrylatgemischen ist, die entweder aus Dispersion, durch Extrusion oder durch Coextrusion angetragen wird.

7. Verpackung nach einem der Ansprüche 1 bis 6, dadurch gekennzeichnet, daß die Deckelfolie auf der Oberseite mit einer Metallisierung und/oder einer Bedruckung versehen ist.

8. Verpackung nach einem der Ansprüche 1 bis 7, dadurch gekennzeichnet, daß die Gesamtdicke der Deckelfolie im Bereich von 20 bis 1 000 µm liegt, insbesondere von 30 bis 500 µm, besonders bevorzugt von 35 bis 200 µm.

## Claims

1. A cup-like package of plastic, comprising a one-piece receptacle (1), the top filling and removal opening of which is sealed by a peel-off cover film (2), the cover film being a multilayered plastics film and being composed of two outer plastics layers between which an adhesive layer is embedded, wherein the multilayered plastics film is a multilayered polyester film (5, 6), the outer plastics layers are polyester layers, the adhesive layer is a low-melting polyester layer (7), and the cover film has a surface texturing on the upper side.

2. The package as claimed in claim 1, wherein the surface texturing is an embossed pattern.

3. The package as claimed in claim 1 or 2, wherein the embossing depth of the embossed pattern, measured as the difference in height from the peak of an elevation to the bottom of a valley, is in the range from 0.5 to 50 µm, preferably from 3 to 30 µm, particularly preferably from 5 to 20 µm.

4. The package as claimed in one of claims 1 to 3, wherein the polyester material for the outer layers contains polyethylene terephthalate and wherein the inner intermediate layer comprises a copolyester which contains in addition to ethylene terephthalate units also ethylene isophthalate units in a quantity of between 5 and 50 mol%, based on the total content of the copolyester.

5. The package as claimed in one of claims 1 to 4, wherein the cover film bears on its underside an additional sealing layer.

6. The package as claimed in one of claims 1 to 5, wherein the sealing layer is a hot-sealing or cold-sealing layer based on polyolefin, polyvinylidene chloride, copolyesters or polyacrylate/methacrylate mixtures, which is applied either from dispersion, by extrusion or by coextrusion.

7. The package as claimed in one of claims 1 to 6, wherein the cover film is provided on the upper side with a metallization and/or a print.

8. The package as claimed in one of claims 1 to 7, wherein the overall thickness of the cover film lies in the range from 20 to 1,000 µm, in particular from 30 to 500 µm, particularly preferably from 35 to 200 µm.

## Revendications

1. Emballage en plastique en forme de gobelet, comprenant un récipient (1) en une seule pièce, dont l'ouverture supérieure permettant le remplissage et le prélèvement est fermée par une feuille d'opercule (2) susceptible d'être retirée, dans lequel l'opercule est une feuille de matière plastique multicouche et est constituée de deux couches externes de matière plastique, entre lesquelles est insérée une couche d'adhésif, caractérisé en ce que la feuille de matière plastique multicouche est une feuille de polyester (5, 6) multicouche, en ce que les couches externes de matière plastique sont des couches de polyester, la couche d'adhésif est une couche (7) de polyester à bas point de fusion, et en ce que l'opercule présente sur sa face supérieure une structuration de surface.

2. Emballage selon la revendication 1, caractérisé en ce que la structuration de surface est un motif estampé.

3. Emballage selon la revendication 1 ou 2, caractérisé en ce que la profondeur d'estampage du motif estampé, mesurée par la différence de hauteur entre le sommet d'une forme en saillie et le fond d'une forme en creux, est dans la gamme de 0,5 à 50 µm, de préférence de 3 à 30 µm, tout particulièrement de 5 à 20 µm.

4. Emballage selon l'une des revendications 1 à 3, caractérisé en ce que le matériau polyester des couches externes contient du poly(téréphtalate d'éthylène) et en ce que la couche intermédiaire intérieure contient un copolyester, qui comprend, outre des motifs téréphtalate d'éthylène, des motifs isophtalate d'éthylène à raison d'entre 5 et 50 mol %, par rapport au contenu total du copolyester.

5. Emballage selon l'une des revendications 1 à 4, caractérisé en ce que l'opercule comporte sur sa face inférieure une couche de soudage supplémentaire.

6. Emballage selon l'une des revendications 1 à 5, caractérisé en ce que la couche de soudage est une couche de soudage à chaud ou à froid à base de polyoléfine, de poly(chlorure de vinylidène), de copolyesters ou de mélanges polyacrylate/méthacrylate, qui est déposée soit à partir d'une dispersion, soit par extrusion, soit par co-extrusion.

7. Emballage selon l'une des revendications 1 à 6, caractérisé en ce que l'opercule comporte sur sa surface supérieure une métallisation et/ou une impression.

8. Emballage selon l'une des revendications 1 à 5, caractérisé en ce que l'épaisseur totale de l'opercule est dans la gamme de 20 à 1 000 µm, de préférence de 30 à 500 µm, tout particulièrement de 35 à 200 µm.
